# EUROPEAN PATENT SPECIFICATION

(11) **EP 1 683 678 B1**
(45) Date of publication and mention of the grant of the patent: **15.07.2009**
(21) Application number: 06001330.7
(22) Date of filing: 23.01.2006
(51) Int. Cl.: B60N 2/30, B60N 2/48

(54) **Seat apparatus**
Sitzvorrichtung
Dispositif de siège

(30) Priority: 24.01.2005 JP 2005015631
(43) Date of publication of application: 26.07.2006
(73) Proprietor: MITSUBISHI JIDOSHA KOGYO KABUSHIKI KAISHA, Tokyo 108-8410 (JP); Namba Press Works Co., Ltd., Kurashiki-shi Okayama 711-8688 (JP)
(72) Inventor: Morinishi, Yasuji, Minato-ku Tokyo 108-8410 (JP); Kishida, Toshio, Minato-ku Tokyo 108-8410 (JP); Kawakami, Hiroyuki, Kurashiki-shi Okayama 711-0937 (JP); Kodani, Yasushi, Okayama-shi Okayama 709-1213 (JP)
(74) Representative: Vossius & Partner

(56) References cited:
- EP-A- 1 454 788
- EP-A- 1 612 099
- DE-U1- 9 308 776
- PATENT ABSTRACTS OF JAPAN vol. 1999, no. 12, 29 October 1999 (1999-10-29) & JP 11 198697 A (HONDA MOTOR CO LTD), 27 July 1999 (1999-07-27)

## Description

The present invention relates to a seat apparatus configured in a manner that a seat on a floor of a vehicle is stored in a folded state in a seat storage unit on the floor of the vehicle.

There is a seat apparatus in which a rear seat for back passenger is provided in a rear portion of the interior of a vehicle. When the passenger is not seated on the rear seat, the rear seat is folded so as to widen a luggage storage space (a cargo storage space) in the rear portion of the interior of the vehicle.

For example, a front end side of a seat cushion of the rear seat and an upper surface side of the floor are joined together with hinges. A seat back is folded toward the seat cushion, and then the rear seat is rotated forward around the hinges and stored in a foot space for the back passenger. The foot space is used as the seat storage unit. Owing to this rear seat storing process, the luggage storage space can be widened and effectively utilized.

The rear seat is also provided with a headrest just as the front seat for securing the safety of the passenger. This headrest is desired to be small for securing a storage space in which the rear seat is stored and for widening a rear field of view. However, the headrest has to be necessarily enlarged in view of the safety and strength, and for meeting the legal requirements.

In order to store the rear seat, such a headrest is removed in advance from the seat back and stored in a storage case, a special storage space provided at the back of a wheel house at a rear end of the interior of the vehicle as disclosed as a related art example in, for example, JP-A-11-198697.

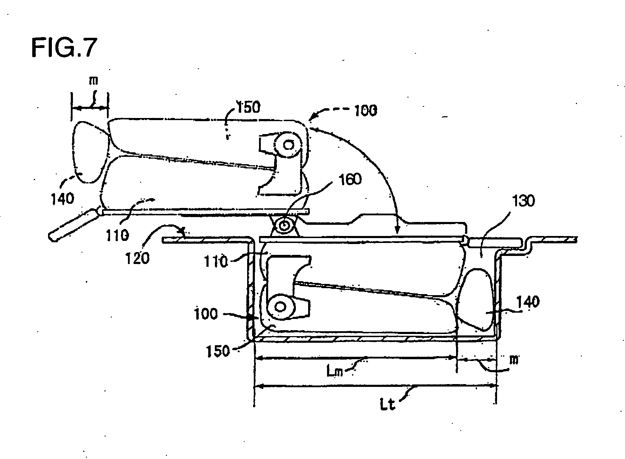

In the case of a seat apparatus disclosed separately from the above example in JP-A-11-198697, a rear end side of a seat cushion 110 of a rear seat 100 is joined to an upper surface side 120 of a floor via hinge pins 160 as shown in Fig. 7. A storage recess 130 in which the rear seat100 is stored is further provided in the upper surface of the floor. Before the rear seat 100 is stored in the storage recess 130, the headrest 140 is rotated forward to reduce the quantity (m) of projection thereof, and the seat back 150 is folded on the rear seat as shown by a two-dot chain line. The folded rear seat 100 as a whole is then rotated rearward, and stored in the storage recess 130 as shown by solid line. A luggage storage space is thereby flattened and widened.

The headrest of the type which is fixed to and removed from the seat back disclosed as a related art example in JP-A-11-198 697 is taken out from the storage case every time the headrest is used again, and necessarily fixed to the seat back. Therefore, the headrest storage and re-fixing operations are troublesome. Also, the storage case cannot be used as a utility box.

When the headrest 140 is folded short with respect to the seat back 150, and the rear seat as a whole 100 in which the seat back 150 is folded on the seat cushion is stored in the storage recess 130 as shown in Fig. 7, a width Lt in the longitudinal direction of a vehicle body of the storage recess 130 becomes equal to the sum of a width Lm and a width m. The width Lm is a width in which the seat back 150 and the seat and cushion 110 are piled. The width m is a width of projection of the headrest 140. Thus, the storage space becomes relatively large.

Moreover, when the vehicle runs with the rear seat 100 not stored in the storage recess 130, the rear field of view of a driver is obstructed by a distance corresponding to the width m of projection of the headrest 140 even when the headrest 140 is folded short.

A seat apparatus according to preamble of claim 1 is disclosed in EP-A-1454788.

The present invention has been made in view of these problems, and aims at providing a seat apparatus capable of folding a seat back, a seat cushion and a headrest to a comparatively small dimension with a high operation efficiency, capable of downsizing a seat storage space in which these parts are stored, and capable of saving the space.

This object can be achieved by the features defined in the claims.

Particularly, according to the invention, there is provided a seat apparatus including: a seat cushion provided in a vehicle; a seat back pivotably joined to the seat cushion, the seat back capable of being folded forward so as to be superposed on the seat cushion; a seat storage unit in which the seat cushion and the seat back are stored in a folded state; and a headrest attached to the seat back via a pivotable member, the headrest capable of being stored in a clearance defined between a back supporting surface of the seat back and a sitting surface of the seat cushion when the seat cushion and the seat back are folded, wherein the headrest is pivotably supported by the pivotable member in a position ahead of an anteroposterior center of the headrest.

According to another aspect of the invention, the pivotable member enables the headrest to rotate to be superposed on the back supporting surface of the seat back.

According to a further aspect of the invention, the seat cushion and the seat back are swung and stored in the seat storage unit provided in the floor of the vehicle with the headrest stored in the clearance.

According to another aspect of the invention, the seat cushion and the seat back are rotated and stored in the seat storage unit provided in the floor of the vehicle with the headrest stored in the clearance.

According to the invention, the headrest can be folded toward the back supporting surface of the seat back, and stored in a tightly held state in the clearance between the folded seat back and the seat cushion without projecting to the outside. Therefore, the storage space in the seat storage unit provided in the floor in which the short-folded seat body as a whole is stored can be comparatively miniaturized, i.e., the saving of the space can be done, so that the space in the interior as a whole of the vehicle can be effectively utilized. Moreover, since the clearance between the seat back and the seat cushion can be secured comparatively easily, the number of limitations on the shape and dimensions of the headrest held in the clearance are comparatively small, and a demand for increasing the dimensions of the headrest can be met. Moreover, when the seat back and the seat cushion are folded, the removing of the headrest is not needed, and the operation efficiency of the seat folding operation is high.

According to the second aspect, the headrest can be brought down up to substantially 180° so that the headrest can be piled on the seat back by the pivotable member, and this enables the headrest to be stored easily in the clearance between the seat back and the seat cushion.

According to the invention, the headrest is pivotably supported at the portion which is ahead of the anteroposterior center thereof. Therefore, when the headrest is in a not-in-use position, the headrest can be easily set in a position ahead of the seat back, so that a large recess comes to be unnecessary to be provided in the seat back. This enables the sitting comfort and outer appearance of the seat to be improved. When the headrest is in an in-use position, the headrest can be easily set in a position on the comparatively rear side thereof, so that the sitting comfort of the seat can be improved.

According to the further aspect, since the folded seat body is moved to a lower storage position by a parallel link mechanism, the seat body shifting force becomes satisfactory at a low level.

According to another aspect, the folded seat body as a whole in which the headrest is held in the clearance between the seat back and the seat cushion can be rotated and stored in the seat storage unit provided in the floor, and the operation efficiency of the seat storage work is high.

The invention is described in detail in conjunction with the drawings, in which;
Fig. 1 is a schematic plan view of a wagon type vehicle to which a seat apparatus according to a first embodiment of the invention is applied;
Fig. 2 is a partially cutaway schematic sectional view of a part of a rear portion of a vehicle body in which the seat apparatus of Fig. 1 is used;
Fig. 3 is a partially cutaway enlarged sectional view of a rear seat support structure used in the seat apparatus of Fig. 1;
Fig. 4 is a side view of a pivotable member joining together an upper portion of the seat back and a headrest which are used in the seat apparatus of Fig. 1;
Fig. 5 is a schematic front view of the pivotable member for joining together the upper portion of the seat back and the headrest which are used in the seat apparatus of Fig. 1;
Fig. 6 is a schematic partially cutaway view of a portion of a rear portion of a wagon type vehicle to which another embodiment of the invention is applied; and
Fig. 7 is a schematic construction diagram showing a seat storage condition in a related art seat apparatus.

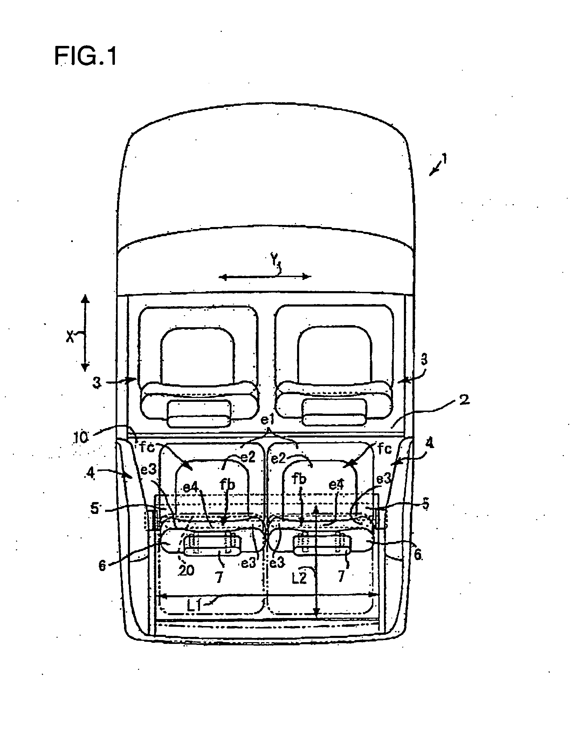

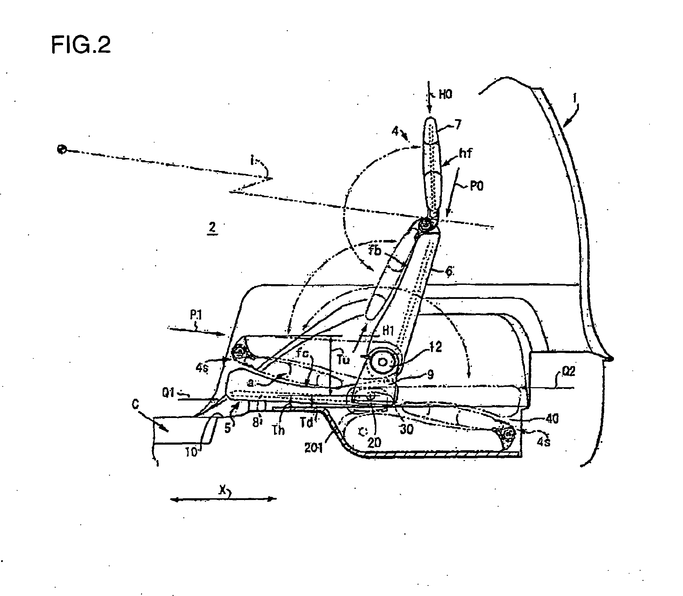

Figs. 1 and 2 show a vehicle in which a seat apparatus according to an embodiment of the present invention is provided.

A vehicle 1 is a wagon type vehicle provided at a front portion of the interior 2 thereof with a pair of front seats 3, and at a rear portion of the interior 2 thereof with a pair of rear seats 4. The left and right seats are formed symmetrically, and the left rear seat 4 will be mainly described.

The rear seat 4 has a seat cushion 5, a seat back 6, and a headrest 7. The seat cushion 5 includes a cushion frame 8 of the seat constituting a skeletal structure, a plurality of springs (not shown) fixed in the defined space of the frame 8, and a pad member (not shown) and a surface skin member (not shown) which cover these parts. As shown in Fig. 1, a sitting surface fc forming an upper surface of the seat cushion 5 is swollen comparatively upward at the outer circumferential potions e1 of the left and right ends and front end of the sitting surface, and formed so as to make a recess in the central rear region e2 which extends from the central portion to a rear portion of the sitting surface. The central rear region e2 has sizes which permit the main portion of the headrest 7 to be substantially superposed on the central rear region e2 when a rear surface hf of the headrest 7 which will be described later is superposed thereon.

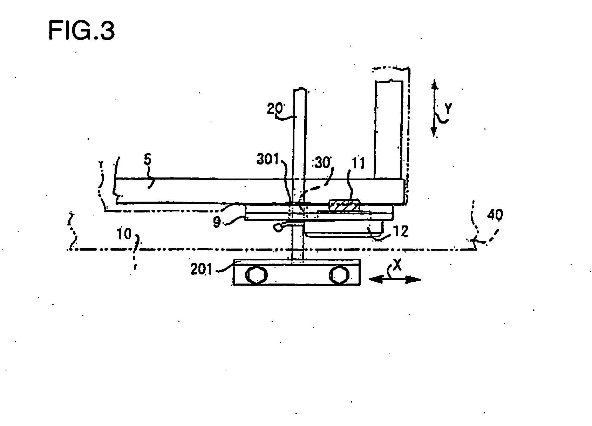

The left and right end portions of the cushion frame 8 of the seat cushion 5 close to the rear end portion thereof have upwardly projecting hinges 9. As shown in Fig. 3, each hinge 9 is bent at an upper portion thereof rather than a lower portion thereof in a stepped manner toward the outside of the seat. Moreover, the hinge 9 is provided at the upper front portion thereof with a pivot hole 30, and at a rear upper portion thereof with a seat adjuster 12.

A pivotal support pin 20 elongated in the direction Y of the width of the vehicle is passed through the pivot hole 30 of the hinge 9 via a resin bearing member 301. This pivotal support bar 20 supports the left and rear seats 4, and is fixed at the left and right ends thereof to the floor 10 via brackets 201. The pivotal support bar 20 is provided across a position above an opening of a storage recess 40, which forms a seat storage unit to be described later, in the direction Y of the width of the vehicle, and brackets 201 at the left and right ends of the pivotal support bar are fixed to left and right edge portions of the opening of storage recess 40.

The seat back 6 is fixed to the rear upper portion of the hinge 9 via the seat adjuster 12. The seat adjuster 12 employs a structure in which the angle of inclination of the seat back 6 can be shifted to a level at which the passenger sits on the seat regularly and can retain the posture. A base end of the frame 11 of the seat back is integrally combined with an inner portion of the structure. The seat back 6 includes the substantially square frame 11 joined to the frame 8 of the seat cushion 8 via the seat adjuster 12, a plurality of springs (not shown) fixed in the region in which the frame 11 of the seat back is formed, a headrest fixing board 13 integrally joined to the upper end that is a swinging end of the frame 11 of the seat back, and the pad member (not shown) and surface skin member (not shown) which cover these parts.

The seat adjuster 12 works so that the seat back 6 supported thereon is shifted easily and retained from a normal position PO of the seat shown by a solid line in Fig. 2 to a seat folding position P1 shown by a two-dot chain line in Fig. 2, and vice versa.

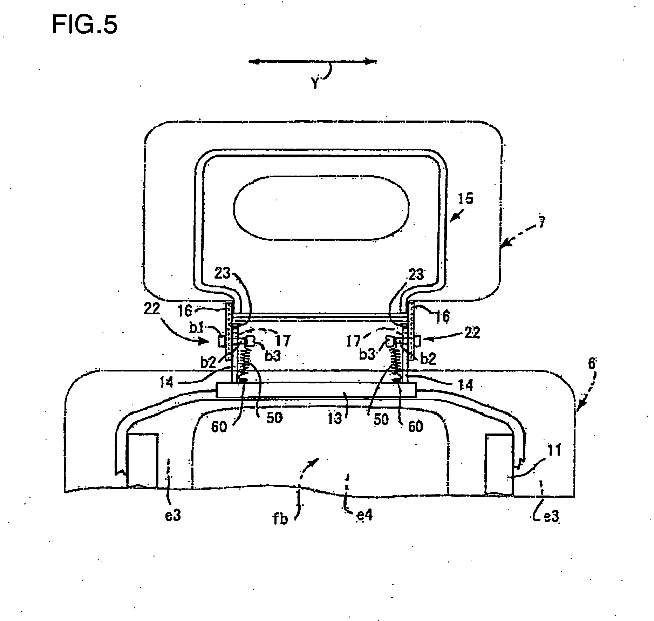

As shown in Figs. 1 and 5, the passenger's back supporting surface fb forming the front surface of the seat back 6 is swollen comparatively forward at the left and right vertical edge portion e3 thereof so that the vertical central portion e4 is recessed with respect to the left and right edge portions e3. The vertical central portion e4 has such sizes that permit the main portion of the headrest 7 to be substantially superposed on the recessed vertical central portion e4 when a front surface hff of the headrest 7, which will be described later, is superposed on the vertical central portion e4.

The headrest fixing board 13 welded to the upper end portion of the frame 11 of the seat back is provided at the upper side of the left and right ends thereof with the vertical pivotal support plates 14 extending outward, and the headrest 7 is foldably supported on these left and right vertical pivotal support plates 14.

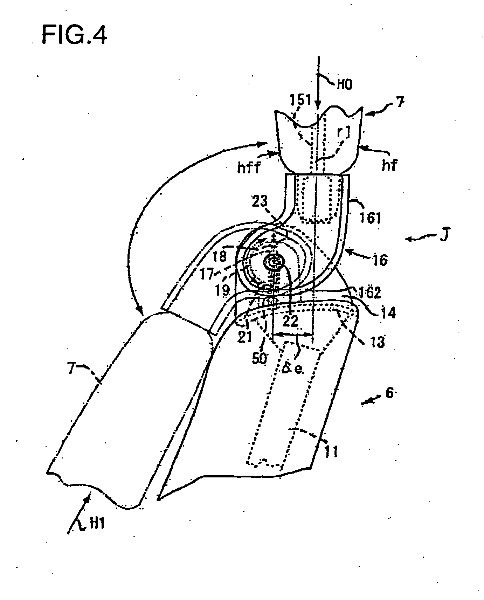

The headrest 7 includes a headrest frame 15 pivotably fixed at a base end thereof to the vertical pivotal support plate 14, and the pad member (not shown) and surface skin member (not shown) covering the circumference of the headrest frame. The headrest 7 as a whole has a hollow swollen body of a substantially rectangular shape and a large thickness as shown in Fig. 4.

The headrest frame 15 is formed so that the shape retainability of the headrest 7 is maintained by a rectangular frame body, and has a substantially rectangularly bent main portion 151, and a downwardly forwardly bent projecting extending member 16 (downwardly extending member) downwardly forwardly bent and projecting from the left and right lower ends of the main portion 151. The left and right downwardly extending members 16 are pin-combined at the central portions thereof with the left and right vertical pivotal support plates 14, and these parts constitute a pivotable member J.

The left and right vertical pivotal support plates 14 constituting a part of the pivotable member J are provided at central portions thereof with elongated holes 17 extending in the vertical direction of the seat back 6. In the direction of extension of the elongated holes 17, the peripheral edge portions of the pivotal support plates 14 are provided with steady engagement recesses 18 (refer to Fig. 4). The longitudinally directed pivotal support plates 14 are provided at the sections of their peripheral end portions which are at the front side of the steady engagement recesses 18 with arcuately curved edge portions 19, and fold engagement recesses 21 in the portions which constitute lower ends of the curved edge portions 19.

The downwardly extending member 16 constituting the other pivotable member J is provided so as to be superposed on the outer side surfaces of the two vertical pivotal support plates 14. As shown in Fig. 4, the downwardly extending member 16 in side elevation is provided with a vertical portion 161, and a forwardly bent portion 162 bent forward from a lower end of the vertical portion 161 and extended, and the forwardly bent portion 162 is provided at the central section thereof with a pivotal pin 22 extending in the direction Y of the width of the vehicle. This pivotal pin 22 is passed through the elongated hole 17 of the vertical support plate 14, and fixed therein in a slidable manner so that the pivotal support pin does not come off.

The pivotal support pin 22 is provided with a base portion b1 welded thereto after the pivotal pin 22 is passed through the center of the forwardly bent portion 162, a main portion b2 projecting from the base portion b1 to the central portion of the headrest and inserted into the elongated hole 17 of the vertical pivotal support plate 14, and a spring receiving end b3 further projecting from the main portion b2. One end of a coiled spring 50 is engaged with the spring receiving end b3, and a lower end of the coiled spring 50 is engaged with an engagement portion 60 of the headrest fixing board 13. The pivotal support pin 22 receiving the elastic force of this coiled spring 50 via the spring receiving end b3, i.e., the headrest 7 is constantly drawn to the lower end of the elongated hole 17.

The downwardly extending member 16 is provided at the upper' side of the portion thereof to which the pivotal pin is fixed with an engagement pin 23 projecting toward the central portion of the headrest 7. The relative position of the engagement pin 23 is set so that, when the headrest 7 is held in an in-use position HO which will be described later, the engagement pin 23 is engaged with the steady engagement recess 18 of the vertical pivotal support plate 14; and so that, when the headrest 7 is held in a non-in-use position H1, the engagement pin 23 is engaged with the folding engagement recess 21.

When the headrest 7 is held in the in-use position HO, the engagement pin 23 is engaged with the steady engagement recess 18 of the vertical pivotal support plate 14, and, in order to retain this condition, the coiled spring 50 elastically draws the pivotal support pin 22 to the lower end of the elongated hole 17. The engagement pin 23 is thus engaged with the steady engagement recess 18 of the vertical pivotal support plate 14, and the headrest 7 is thereby stably joined to and supported on the seat back 6 via the downwardly extending member 16 and vertical pivotal support plate 14.

When the coiled spring 50 is elastically displaced, the pivotal support pin 22 on the side of the headrest 7 can be drawn up along the elongated hole 17. At that time, the engagement pin 23 is disengaged from the steady engagement recess 18. When the headrest 7 is rotated forward around the support pin 22 after the engagement pin 23 is disengaged from the steady engagement recess 18, the engagement pin 23 is slid along the arcuate curved edge portion 19, engaged with the fold engagement recess 21, and held in the position H1 in which the headrest 7 is not in use.

The downwardly extending member 16 joined relatively rotatably to the vertical pivotal support plate 14 via the pivotal support pin 22 has a position, to which the forwardly bent extending member 16 projects forward by an offset quantity δe with respect to the center line rl of the main portion 151. The headrest 7 is thereby necessarily supported pivotably in a position ahead of the anteroposterior center of the headrest.

Owing to the setting of such an offset quantity δe, when the headrest 7 is rotated to a position on the front side of the in-use position HO, which will be described later, and reaches the not-in-use position H1, the headrest 7 is folded in a forwardly offset state by the quantity δe with respect to the pivotal support pin 22 of the vertical pivotal support plate 14 as shown in Fig. 4. This enables the headrest 7 to be positioned easily ahead of the seat back 6. Therefore, it is not necessary to provide a large recess in the passenger's back supporting surface fb of the seat back 6, and the sitting comfort and outer appearance can be improved. Moreover, when the headrest 7 is in the in-use position, the headrest 7 can be positioned easily in a comparatively rear side position, and the sitting comfort can be improved.

The right side rear seat 4 is also formed symmetrically with the above-described left side rear seat 4. These seats 4 are all supported at the rear portions thereof on the pivot bar 20 elongated in the direction Y of the width of the vehicle, and locked removably at the front portions thereof in the floor 10 via a lock mechanism (not shown).

In the portion of the floor 10 which is in the lower rear region of the two rear seats 4, a storage recess 40 for storing the seats therein is provided. The shape of the storage recess 40 is set so that the left and right rear seats 4 are held as a seat-folded body 4S as shown in Figs. 1 and 2, in which the rear seats 4 are short-folded as will be described later in the state shown by a two-dot chain line in the folding position Q1; and so that the rear seats 4 can then be stored in a reversible state in a seat-reversed storage position Q2 in the storage recess 40.

The width L1 (refer to Fig. 1) of the hole in the direction Y of the width of the vehicle is set as a width determined by adding a predetermined marginal width to the level twice as high as that of the lateral size of each of the two seat folded bodies 4S, while the width L2 of the hole in the longitudinal direction X is set substantially as large as a width determined by adding a predetermined marginal width to the longitudinal size of the seat folded body 4S. It is not necessary to consider the length of the headrest 7 in determining the width L2 of the hole in the longitudinal direction X. The width L2 of the hole can be set comparatively small, and a sufficient degree of freedom of layout of the holes can be secured.

As shown by a two-dot chain line in Fig. 2, the rear seat 4 on the side of the seat folded body 4S is folded reversely around the pivotal support bar 20 and stored in the storage recess 40. Let Th equal to the height measured from the floor 10 to the pivotal support bar 20, and Tu, Td the vertical sizes of the part of the folded rear seat 4 which is on the upper side and lower side respectively of the pivotal support bar 20. The seat folded body 4S reversed and stored in the storage recess 40 therefore projects upward from the floor 10 by (Th+Td), and substantially covers the upwardly directed opening of the storage recess 40. Although not shown, in the case where the left and right front seats 3 (refer to Fig. 1) are moved rearward, the seat backs 6 of the rear seats are rotated at substantially 180° and are placed on the floor 10 having a stepped portion, a substantially planar surfaces continuing from the front seats 3 to the bottom surfaces of the seat backs 6 can be formed. In this manner, the luggage storage space at the rear portion of the interior of the vehicle which can be effectively utilized can be widened.

The operation of the seat apparatus of Fig. 1 will now be described.

In a regular traveling condition of the vehicle, the seat back 6 on the seat cushion 5 of the rear seat is maintained in a standing state in a predetermined position PO of the seat, and the headrest 7 on the seat back in a standing state in the in-use position HO and supports the head of the passenger sitting on the rear seat.

Assuming that the vehicle travels with only the headrest 7 folded from the in-use position HO to the not-in-use position H1 with the passenger not sitting on the rear seat 4. In this case, the line of sight i of the driver is lower than the lower portion of the headrest 7 in a not-yet folded state due to the folded headrest 7, and the rear field of view can be secured comparatively easily.

Assuming that the vehicle travels by flattening the luggage storage space in the rear portion of the interior of the vehicle with the passenger not sitting on the rear seat 4. In this case, the headrest 7 is folded in the not-in-use position H1 on the side of the seat back 6, and the seat back 6 is folded from the predetermined position PO to the seat folding position P1. At this time, the headrest 7 can be stored without projecting to the outside in the clearance a between the folded seat back 6 and seat cushion 5. The folded body 4S of the seat back 6 and the seat cushion 5 between which the headrest 7 is held is reversed from the folding position Q1 to the reverse storage position Q2, and stored in the storage recess 40. Especially, the headrest 7 is turned around the position as the center of the pivotal movement in which the front bent extending member 16 projects forward with respect to the center line rl of the main portion 151 by the offset quantity δe. Therefore, when the headrest 7 is folded, the headrest 7 can be positioned easily ahead of the seat back 6, so that the sitting comfort and outer appearance of the seat can be improved with a large recess unnecessary to be provided in the passenger's back supporting surface fb of the seat back 6.

When such a short seat folded body 4S is stored in the storage recess 40, the width L2 of the hole in the longitudinal direction X of the storage recess 40 can be set comparatively small since the headrest does not project from the clearance a to the outside, and this enables the storage space of the storage recess 40 to be miniaturized comparatively. Namely, the space can be saved, and the space in the interior as a whole of the vehicle can be effectively utilized. Moreover, since the clearance a between the seat back 6 and the seat cushion 5 can be secured comparatively easily, the restrictions on the shape and dimensions of the headrest held in this clearance a are comparatively little, so that the enlarging requirements for the headrest 7 can be met. Furthermore, it is unnecessary to remove the headrest when the seat back 6 and the seat cushion 5 are folded, and the operation efficiency in folding these parts is high.

The downwardly extending member 16 and vertically extending pivotal support plate 14 which constitute the pivotable member J are formed so that these parts are brought down at about substantially 180° to the not-in-use position H1 in which the headrest 7 is superposed on the seat back 6. Therefore, the headrest 7 can be stored easily in the clearance a between the seat back 6 and the seat cushion 5.

The headrest 7 is stored in the clearance a between the seat back 6 and the seat cushion 5, and the short folded body 4S as a whole is rotated to the rear portion of the vehicle and stored in the storage recess constituting the sheet storage unit provided in the floor 10. Therefore, the storage operation efficiency is high in this respect. Moreover, the luggage storage space can be flattened and enlarged, and this space can be effectively utilized.

In the description of the seat apparatus of Fig. 1, the short-folded body 4S is referred to as a short-folded body rotated reversely in the rearward direction. Instead of this structure, a foot space (for example, a space shown by a reference letter C in Fig. 2) is secured in a position ahead of the stepped portion of the floor, and this foot space C may be used as the seat storage unit, in which the seat folded body 4S as a whole rotated reversely in the forward direction is stored. In this case, operation and effect identical with those in the seat of Fig. 1 are obtained.

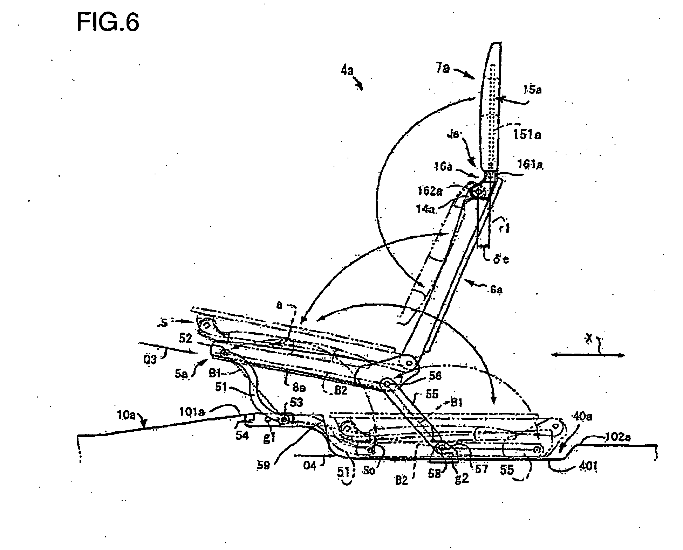

Fig. 6 shows a seat apparatus according to another embodiment provided with a rear seat 4a fixed thereto instead of the rear seat 4 fixed to the rear portion of the vehicle body of the wagon type vehicle of Fig. 1.

The rear seat 4a as compared with the rear seat 4 has a different mechanism for fixing a seat cushion 5a to a floor 10a. Since the construction of the other parts of this mechanism is substantially the same as that of the corresponding parts of the previously described embodiment, the description of the duplicated portions of the mechanism will be omitted. The rear seat 4a has the seat cushion 5a having a sitting surface fc, a seat back 6a having a passenger's back supporting surface fb, and a headrest 7a for maintaining the safety of the passenger's head portion. The seat cushion 5a includes a square cushion frame 8a, a plurality of springs (not shown) fixed to the frame 8a, and a pad member (not shown) and a surface skin member (not shown) for covering these parts. As shown in Fig. 6, the portion of the floor 10a which is just under the rear seat 4a is provided with a storage recess 40a as a recess-forming seat storage unit, and front and rear edge portions 101a, 102a are formed at the front and rear sides of the storage recess 40a with left and right edge portions (not shown) of the recessed portion formed at the left and right sides thereof.

The upper ends of lever type front leg members 51 are combined by pins 52 with the left and right sides of front ends of a cushion frame 8a of the rear seat 4a, and lower ends of the front leg members 51 are pin-combined with the front edge portions 101a via the pivotal support brackets 54 having pins 53. The upper ends of lever type rear leg members 55 are combined by pins 56 with the left and right rear ends of the frame 8a of the seat cushion, and the lower ends of the rear leg members 55 are pin-combined with a lower wall surface 401 of the storage recess 40a via a pivotal support bracket 57 having pins 58. The front leg members 51 are bent in the shape of the inverted letter S so as to reduce the quantity of interference thereof with the front edge portion 101a of the recess and miniaturize the interference preventing recess 59. Referring to Fig. 6, a reference symbol g1 denotes a stopper for restricting the steady position of the front leg members 51, and g2 a stopper for restring the storage position of the rear leg members 55.

A distance between upper and lower pivotal support points (between pins) of the front leg members 51 and that (distance shown by a broken line in Fig. 6) between upper and lower pivotal support points (between pins) of the upper and lower pivotal support points of the rear leg members 55 are set equal B1. A distance between front and rear pivotal support points (between pins 52, 56) on the upper side and a distance (shown by broken line in Fig. 6) between the front and rear pivotal support points on the lower side are set equal B2. These parts constitute a parallel link mechanism. Therefore, since the front and rear leg members 51, 55 are swung around the lower side front and rear pivotal support points (pins 53, 58), the frames 8a of the cushions of the seats allow to be pivotally displaced from the upper side of the floor 10a to the lower wall surface 401 of the storage recess 40a.

Resin bushes (not shown) are fitted around the upper side front and rear pins 52, 56 and lower side front and rear pins 53, 58, and these pins are inserted into opposite members. Since these bushes are elastically displaced, they allow the seats to be swung in an over-displacement region shown by a reference symbols So in Fig. 6.

In the seat apparatus of Fig. 6, vertical portions 161a are also welded to the fowardly bent extending members 16a extending in the downwardly forward direction with respect to the left and right lower ends of the main portions 151a of the headrest frames 15a by which the shape retainability of the headrests 7a are maintained, and the central sections of the forwardly bent extending portions 162 continuing to the lower ends of the vertical portions 161a are pin-joined to the left and right vertical pivotal support plates 14a on the side of the seat backs 6a. These parts constitute the pivotable members Ja.

The folded seat body 4S in which the headrest 7a is stored in the clearance between the folded seat back 6a and the seat cushion 5a with the headrest 7a not projecting to the outside is parallel-moved from the folding position Q3 to the lower storage position Q4 and stored in the storage recess 40a. In this case, the headrest 7a does not project either from the clearance a. This enables the storage space of the storage recess 40a to be comparatively miniaturized, the space to be saved, and the space of the interior as a whole of the vehicle to be effectively utilized. Furthermore, the seat apparatus is formed so that the headrest 7a is swung around the position as the center of the turning movement, in which the member 16a bent forward and extending with respect to the center line rl of the main portion 151a projects forward by a distance corresponding to the offset quantity δe. This enables the headrest 7 to be positioned easily ahead of the back 6a of the seat. Therefore, it is unnecessary to provide a large recess in the passenger's back supporting surface fb of the seat back 6a, and the sitting comfort and outer appearance can be improved.

Since the folded seat body 4S is moved to the lower storage position Q4 by the parallel link mechanism, the seat body shifting force becomes satisfactory at a level comparatively lower than that that in the case where the folded seat body is reversely moved. Although the rear seat 4a of Fig. 6 is described as a rear seat moved in the rearwardly downward direction by the parallel link mechanism, a folded seat body may be formed instead which is moved by the parallel link mechanism to a foot space (for example, a space shown by a reference symbol C in Fig. 2) in front of the stepped portion of the floor. In this case, the operation and effect substantially the same as those of the seat apparatus of Fig. 6 are obtained.

## Claims

1. A seat apparatus comprising:
a seat cushion (5) provided in a vehicle (1);
a seat back (6) pivotably joined to the seat cushion, the seat back capable of being folded forward so as to be superposed on the seat cushion; and
a seat storage unit (40) in which the seat cushion and the seat back are stored in a folded state;
**characterized by** further comprising a headrest (7) attached to the seat back via a pivotable member (J), the headrest capable of being stored in a clearance defined between a back supporting surface (fb) of the seat back and a sitting surface (fc) of the seat cushion when the seat cushion and the seat back are folded, wherein the headrest (7) is pivotably supported by the pivotable member (J) in a position ahead of an anteroposterior center of the headrest (7).

2. The seat apparatus according to Claim 1, wherein the pivotable member (J) enables the headrest (7) to rotate to be superposed on the back supporting surface (fb) of the seat hack (6).

3. The seat apparatus according to Claim 1 or 2, wherein the seat cushion (5) and the seat back (6) are swung and stored in the seat storage unit (40a) provided in the floor of the Vehicle with the headrest stored in the clearance.

4. The seat apparatus according to Claim 1 or 2, wherein the seat cushion (5) and the seat back (6) are rotated and stored in the seat storage unit (40) provided in the floor of the vehicle with the headrest (7) stored in the clearance.

## Patentansprüche

1. Sitzvorrichtung mit:
einem in einem Fahrzeug (1) angeordneten Sitzpolster (5);
einer mit dem Sitzpolster gelenkig verbundenen Sitzrückenlehne (6), wobei die Sitzrückenlehne dazu geeignet ist, derart nach vorne geklappt zu werden, dass sie auf dem Sitzpolster angeordnet ist; und
einer Sitzaufnahmeeinheit (40), in der das Sitzpolster und die Sitzrückenlehne in einem geklappten Zustand aufgenommen werden;
**dadurch gekennzeichnet, dass**
die Sitzvorrichtung ferner eine Kopfstütze (7) aufweist, die durch ein schwenkbares Element (J) an der Sitzrückenlehne befestigt ist, wobei die Kopfstütze dazu geeignet ist, in einem Zwischenraum aufgenommen zu werden, der zwischen einer Rückenstützfläche (fb) der Sitzrückenlehne und einer Sitzfläche (fc) des Sitzpolsters definiert ist, wenn das Sitzpolster und die Sitzrückenlehne geklappt sind;
wobei die Kopfstütze (7) durch das schwenkbare Element (J) in einer Position vor einer anteroposterioren Mitte der Kopfstütze (7) schwenkbar gehalten wird.

2. Sitzvorrichtung nach Anspruch 1, wobei die Kopfstütze (7) durch das schwenkbare Element (J) derart gedreht werden kann, dass sie auf der Rückenstützfläche (fb) der Sitzrückenlehne (6) angeordnet wird.

3. Sitzvorrichtung nach Anspruch 1 oder 2, wobei das Sitzpolster (5) und die Sitzrückenlehne (6) geschwenkt und in der im Boden des Fahrzeugs ausgebildeten Sitzaufnahmeeinheit (40a) aufgenommen werden, während die Kopfstütze im Zwischenraum aufgenommen wird.

4. Sitzvorrichtung nach Anspruch 1 oder 2, wobei das Sitzpolster (5) und die Sitzrückenlehne (6) gedreht und in der im Boden des Fahrzeugs ausgebildeten Sitzaufnahmeeinheit (40) aufgenommen werden, während die Kopfstütze (7) im Zwischenraum aufgenommen wird.

## Revendications

1. Dispositif formant siège comprenant :
un coussin de siège (5) placé dans un véhicule (1);
un dossier de siège (6) joint de façon à pivoter au coussin de siège, le dossier de siège pouvant être plié vers l'avant de façon à être superposé sur le coussin de siège ; et
une unité de rangement de siège (40) dans laquelle le coussin de siège et le dossier de siège sont rangés dans un état plié ;
**caractérisé en ce qu'**il comprend en outre un appuie-tête (7) fixé sur le dossier de siège via un élément pivotant (J), l'appuie-tête (7) pouvant être rangé dans un espace défini entre une surface de support de dos (fb) du dossier de siège et une surface d'assise (fc) du coussin de siège quand le coussin de siège et le dossier de siège sont pliés,
dans lequel l'appuie-tête (7) est supporté de façon à pivoter par l'élément pivotant (J) dans une position en avant d'un centre antéropostérieur de l'appuie-tête (7).

2. Dispositif formant siège selon la revendication 1, dans lequel l'élément pivotant (J) permet à l'appuie-tête (7) de tourner pour être superposé sur la surface de support de dos (fb) du dossier de siège (6).

3. Dispositif formant siège selon la revendication 1 ou 2, dans lequel le coussin de siège (5) et le dossier de siège (6) sont basculés et rangés dans l'unité de rangement de siège (40a) placée dans le plancher du véhicule avec l'appuie-tête rangé dans l'espace.

4. Dispositif formant siège selon la revendication 1 ou 2, dans lequel le coussin de siège (5) et le dossier de siège (6) sont tournés et rangés dans l'unité de rangement de siège (40) placée dans le plancher du véhicule avec l'appuie-tête (7) rangé dans l'espace.
